# EUROPÄISCHE PATENTSCHRIFT

(11) **EP 0 746 588 B1**
(45) Veröffentlichungstag und Bekanntmachung des Hinweises auf die Patenterteilung: **20.06.2001**
(21) Anmeldenummer: 95908923.6
(22) Anmeldetag: 10.02.1995
(51) Int. Cl.: C08K 5/00

(54) **STABILISATORGEMISCH AUS CHROMANDERIVATEN, ORGANISCHEN PHOSPHITEN ODER PHOSPHONITEN UND AMINEN**
STABILIZER MIXTURE MADE UP OF CHROMANE DERIVATIVES, ORGANIC PHOSPHITES OR PHOSPHONITES AND AMINES
MELANGE DE STABILISANTS, COMPOSE DE DERIVES DE CHROMANE, DE PHOSPHITES ORGANIQUES OU DE PHOSPHONITES ET D'AMINES

(30) Priorität: 23.02.1994 DE 4405670
(43) Veröffentlichungstag der Anmeldung: 11.12.1996
(73) Patentinhaber: BASF AKTIENGESELLSCHAFT, 67056 Ludwigshafen (DE)
(72) Erfinder: KROCKENBERGER, Jürgen, D-70569 Stuttgart (DE); GOETZE, Wolfgang, D-67133 Maxdorf (DE); TRAUTH, Hubert, D-67373 Dudenhofen (DE); AUMÜLLER, Alexander, D-67435 Neustadt (DE)
(86) Internationale Anmeldenummer: EP9500478
(87) Internationale Veröffentlichungsnummer: WO9523182

(56) Entgegenhaltungen:
- EP-A- 0 263 524
- US-A- 4 559 378
- US-A- 4 867 754

## Beschreibung

Die vorliegende Erfindung betrifft ein neues Stabilisatorgemisch aus Chromanderivaten, organischen Phosphiten oder Phosphoniten und Aminen zur Stabilisierung von organischem Material, insbesondere von Kunststoffen, gegen die Einwirkung von Licht, Sauerstoff und insbesondere von Wärme.

Aus der DE-A 36 34 531 sind Stabilisatorgemische zur Stabilisierung von Kunststoffen aus Chromanderivaten (Vitamin E, α-Tocopherol) und organischen Phosphiten bzw. Phosphoniten bekannt. Die Mischungen haben jedoch den Nachteil, daß sie sowohl bei der Lagerung als auch nach der Einarbeitung in die Kunststoffe nicht stabil sind. Wahrscheinlich aufgrund von Hydrolysereaktionen in Gegenwart von Spuren von Luftfeuchtigkeit beobachtet man eine Abnahme des Gehaltes an Chromanderivaten und damit eine Verringerung der stabilisierenden Wirkung auf die Kunststoffe.

Aufgabe der vorliegenden Erfindung war es daher, ein stabiles Stabilisatorgemisch bereitzustellen.

Demgemäß würde ein Stabilisatorgemisch, enthaltend
(a) ein oder mehrere Chromanderivate der allgemeinen Formel I 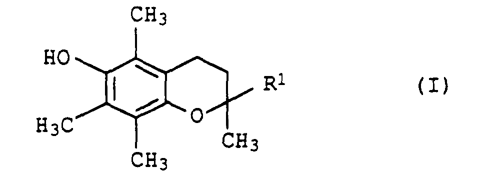 in der R¹ eine Gruppe der Formel 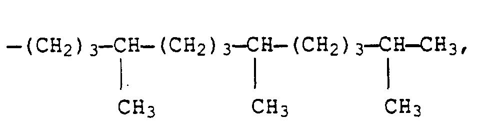 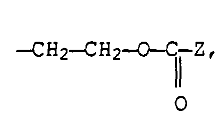 worin Z für C₇- bis C₃₀-Alkyl, vorzugsweise C₁₃- bis C₁₉-Alkyl, steht, -CH₂CH₂-S-(C₁- bis C₃₀-Alkyl), vorzugsweise -CH₂CH₂-S-(C₈- bis C₂₀-Alkyl), oder 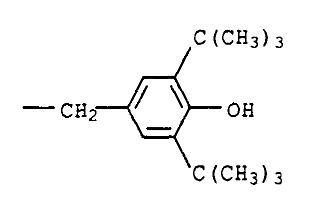 bedeutet,
(b) ein oder mehrere organische Phosphite der allgemeinen Formel II 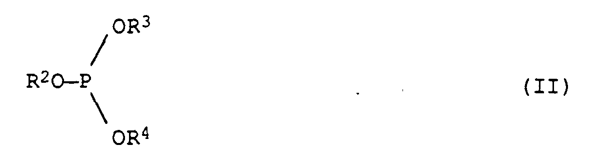 in der die Reste R² bis R⁴ jeweils C₂- bis C₁₂-Alkyl, vorzugsweise C₆- bis C₁₁-Alkyl, insbesondere C₈- bis C₁₀-Alkyl, oder C₆- bis C₁₈-Aryl, vorzugsweise Phenyl, welches durch C₁- bis C₁₈-Alkylgruppen, vorzugsweise ein bis drei C₄- bis C₁₂-Alkylgruppen, substituiert sein kann, bezeichnen,
   oder ein organisches Phosphonit der Formel III 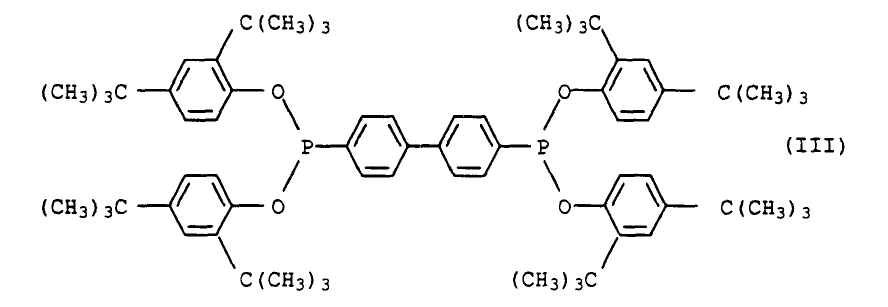 oder Mischungen aus den Phosphiten II und dem Phosphonit III und
c) ein oder mehrere Amine der allgemeinen Formel IV 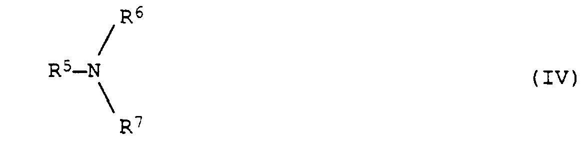 in der die Reste R⁵ bis R⁷ jeweils für Wasserstoff, für C₁- bis C₁₈-Alkyl, welches durch bis zu 5 nicht benachbarte Sauerstoffatome oder Gruppen der Formel -NR⁸- unterbrochen sein und durch bis zu 3 Hydroxylgruppen substituiert sein kann, wobei R⁸ Wasserstoff oder C₁- bis C₄-Alkyl bedeutet, oder für Phenyl, welches durch bis zu 3 C₄- bis C₁₈-Alkylgruppen substituiert sein kann, steht, mit der Ausnahme von NH₃ als Amin IV,
wobei die Komponenten (a) und (b) im Gew.-Verhältnis von 1:5 bis 1:14, vorzugsweise 1:6 bis 1:10, stehen und die Komponenten (c) in einer Menge von 0,01 bis 2,0 Gew.-%, vorzugsweise 0,02 bis 1,0 Gew.-%, insbesondere 0,03 bis 0,5 Gew.-%, bezogen auf die Menge von (a) + (b), im Stabilisatorgemisch vorliegt,
gefunden.

Als Chromanderivate I eignen sich vor allem 2,5,7,8-Tetramethyl-2-(2'-stearoyloxyethyl)chroman (R¹= -CH₂CH₂-O-CO-C₁₇H₃₅) und insbesondere α-Tocopherole, vorzugsweise DL-α-Tocopherol (R¹= -(CH₂)₃-CH(CH₃)-(CH₂)₃-CH(CH₃)-(CH₂)₃-C(CH₃)₂).

Die erfindungsgemäß einsetzbaren organischen Phosphite II sind sowohl flüssige wie auch kristalline Produkte. Als Beispiele für derartige Phosphite sind zu nennen:
- Trisalkylphosphite mit bevorzugt langkettigen linearen oder verzweigten Alkylgruppen wie Octyl-, Nonyl-, Isononyl-, Decyl- oder Isodecylgruppen;
- Triarylphosphite mit unsubstituierten oder ein- bis dreifach alkylsubstituierten Arylgruppen wie Phenyl-, Nonylphenyl- oder 2,4-Di-tert.-butylphenylgruppen;
- gemischte Arylalkylphosphite, wie Diisodecylphenylphosphit oder Diphenylpentaerythritdiphosphit.

Die Phosphite der Formel II können nach bekannten Methoden synthetisiert werden, beispielsweise durch Umsetzung von PCl₃ mit ein- oder mehrwertigen Alkoholen in Gegenwart einer organischen Base oder mit gegebenenfalls substituierten Phenolen ohne Lösungsmittel bei 20 bis 250°C. Die gemischten Alkylarylphosphite werden beispielsweise durch Umsetzung von Triphenylphosphit mit ein- oder mehrwertigen Alkoholen in Gegenwart eines basischen Katalysators, vorzugsweise ohne Lösungsmittel, hergestellt.

Das Phosphonit III ist bekannt und im Handel unter dem Namen Irgafos® P-EPQ der Firma Ciba-Geigy erhältlich.

Die erfindungsgemäß einsetzbaren Amine IV können primäre, sekundäre vorzugsweise tertiäre Amine sein.

Als Beispiele für derartige Amine seien genannt: Butylamin, Dibutylamin, Tributylamin, Tripropylamin, Triisopropylamin, Octylamin, Diisobutylamin oder Stearylamin.

Bevorzugt werden weiterhin Amine, die Hydroxylgruppen enthaltende C₂- bis C₁₈-Reste für R⁵ bis R⁷ besitzen, z.B. Ethanolamin, Diethanolamin, Triethanolamin, Propanolamin, Dipropanolamin, Tripropanolamin, Isopropanolamin, Diisopropanolamin und insbesondere Triisopropanolamin.

Die Amine IV sollten allerdings eine nicht zu hohe Flüchtigkeit aufweisen, daher eignet sich Ammoniak (NH₃) nicht für das erfindungsgemäß Stabilisatorgemisch.

Das erfindungsgemäße Stabilisatorgemisch eignet sich in hervorragender Weise zum Stabilisieren von organischem Material gegen die Einwirkung von Licht, Sauerstoff und vor allem Wärme. Es ist auch wirksam als Metalldesaktivator. Es wird dem zu stabilisierenden organischen Material in einer Konzentration von 0,05 bis 5 Gew.-%, vorzugsweise von 0,01 bis 2 Gew.-%, insbesondere von 0,05 bis 1 Gew.-%, bezogen auf das organische Material, vor, während oder nach seiner Herstellung zugesetzt.

Das erfindungsgemäße Stabilisatorgemisch stellt weiterhin nicht nur ein ausgezeichnetes Antioxidans insbesondere für Kunststoffe sondern auch ein wirksames Dispergiermittel für Pigmente in Flüssigfarben dar.

Unter organischem Material sind beispielsweise kosmetische Präparate wie Salben und Lotionen, Arzneimittelformulierungen wie Pillen und Zäpfchen, photographische Aufzeichnungsmaterialien, insbesondere photographische Emulsionen, Vorprodukte für Kunststoffe und Lacke oder Lacke selbst, insbesondere jedoch Kunststoffe selbst, zu verstehen.

Gegenstand der vorliegenden Erfindung ist außerdem gegen die Einwirkung von Licht, Sauerstoff und vor allem Wärme stabilisiertes organisches Material, insbesondere Kunststoffe, welches das erfindungsgemäße Stabilisatorgemisch in den oben angegebenen Konzentrationen enthält.

Zur Vermischung des erfindungsgemäßen Stabilisatorgemisches vor allem mit Kunststoffen können alle bekannten Vorrichtungen und Methoden zum Einmischen von Stabilisierungsmitteln oder anderen Zusätzen in Polymere angewandt werden.

Das erfindungsgemäße Stabilisatorgemisch kann vor allem zur Stabilisierung von Kunststoffen bei deren Verarbeitung verwendet werden. Derartige Stabilisatorgemische werden Kunststoffen während oder vor der Verarbeitung zugesetzt, um die Kunststoffe vor Zersetzung zu schützen, wobei sich bekanntlich die Wirkungen verschiedener Stabilisatorsysteme addieren können.

Neben dem erfindungsgemäßen Stabilisatorsystem aus den Komponenten (a), (b) und (c) können so auch weitere Stabilisatorzusätze, z.B. die für Stabilisierungszwecke bekannten Synergisten Calciumstearat und Distearylthiodipropionat (S-(CH₂CH₂-COOC₁₈H₃₇)₂) in üblichen Mengen in die Kunststoffe mit eingemischt werden.

Mit den beschriebenen Stabilisatoren können auch zusammen mit Kunststoffen Konzentrate hergestellt werden und diese dann zusammen mit den zu stabilisierenden Kunststoffen verarbeitet werden. Bei der Verarbeitung bringen je nach Anwendungsgebiet Konzentrate Vorteile, da diese bei der Verarbeitung leichter zu handhaben und zu dosieren sind.

Als Kunststoffe, die durch das erfindungsgemäße Stabilisatorgemisch stabilisiert werden können, seien beispielsweise genannt:

Polymere von Mono- und Diolefinen, wie z.B. Polyethylen niedriger oder hoher Dichte, Polypropylen, lineares Polybuten-1, Polyisopren, Polybutadien sowie Copolymerisate von Mono- oder Diolefinen oder Mischungen der genannten Polymeren;

Polystyrol sowie Copolymere von Styrol oder α-Methylstyrol mit Dienen und/oder Acrylderivaten, wie z.B. Styrol-Butadien, Styrol-Acrylnitril (SAN), Styrol-Ethylmethacrylat, Styrol-Butadien-Ethylacrylat, Styrol-Acrylnitril-Methacrylat, Acrylnitril-Butadien-Styrol (ABS) oder Methylmethacrylat-Butadien-Styrol (MBS); halogenhaltige Polymere, wie z.B. Polyvinylchlorid, Polyvinylfluorid, Polyvinylidenfluorid sowie deren Copolymere;

Polymere, die sich von α,β-ungesättigten Säuren und deren Derivaten ableiten, wie Polyacrylate, Polymethacrylate, Polyacrylamide und Polyacrylnitrile;

Polymere, die sich von ungesättigten Alkoholen und Aminen bzw. von deren Acrylderivaten oder Acetalen ableiten, z.B. Polyvinylalkohol und Polyvinylacetat;

Polyurethane, Polyamide, Polyharnstoffe, Polyphenylenether, Polyester, Polycarbonate, Polysulfone, Polyethersulfone und Polyetherketone.

Als gutstabilisierbare Kunststoffe kommen insbesondere Thermoplaste wie Polyvinylchlorid, Styrolpolymerisate, Polyamide, Polycarbonate, Polyphenylenoxid, Polyester, Polyolefine, vorzugsweise Polyethylen und Polypropylen, Polyurethane sowie Duroplaste in Betracht.

Für die Eignung und Wirksamkeit des erfindungsgemäßen Stabilisatorgemisches ist neben der geringen Eigenfarbe und der Verarbeitungsstabilität vor allem die Hydrolysebeständigkeit und der stabile Gehalt an Chromanderivaten I besonders wichtig.

Gegenüber den in der DE-A 36 34 531 beschriebenen Mischungen ist die Hydrolysebeständigkeit, gemessen an der Wasseraufnahme, erheblich verbessert. Dies soll durch das folgende Beispiel verdeutlicht werden.

### Beispiel

Die Wasseraufnahme wurde an dem 100 %igen Stabilisatorgemisch bestimmt. Bei einer relativen Luftfeuchte von 98 % und einer Temperatur von 22°C im Exsikkator wurde die Gewichtszunahme in Abhängigkeit der Lagerzeit bestimmt.
- Mischung 1 (erfindungsgemäß) :: 1 Gewichtsteil D,L-α-Tocopherol, 10 Gewichtsteile Trisnonylphenylphosphit, 0,05 Gewichtsteile Triisopropanolamin
- Mischung 2 (Zum Vergleich gemäß DE-A 36 34 531) :: 1 Gewichtsteil D,L-α-Tocopherol, 10 Gewichtsteile Trisnonylphenylphosphit

Die Ergebnisse sind in der folgenden Tabelle dargestellt.

| Mischung Nr. | Wasseraufnahme in Gew.-% nach | | | | |
|---|---|---|---|---|---|
| | 0 | 5 | 10 | 15 | 20 |
| | | | Tagen | | |
| 1 | 0 | 0,05 | 0,08 | 0,10 | 0,11 |
| 2 | 0 | 2,50 | 3,20 | 5,40 | 8,80 |

## Patentansprüche

1. Stabilisatorgemisch, enthaltend
(a) ein oder mehrere Chromanderivate der allgemeinen Formel I 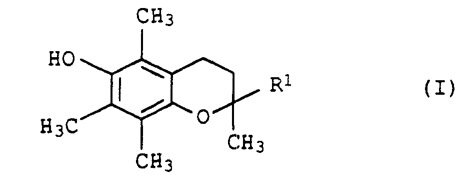 in der R¹ eine Gruppe der Formel 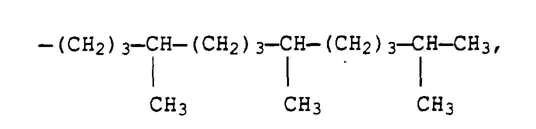 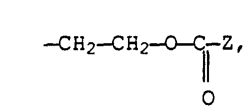 worin Z für C₇- bis C₃₀-Alkyl steht, -CH₂CH₂-S-(C₁- bis C₃₀-Alkyl) oder 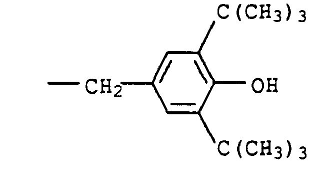 bedeutet,
(b) ein oder mehrere organische Phosphite der allgemeinen Formel II 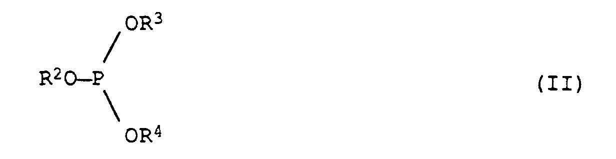 in der die Reste R² bis R⁴ jeweils C₂- bis C₁₂-Alkyl oder C₆- bis C₁₈-Aryl, welches durch C₁- bis C₁₈-Alkylgruppen substituiert sein kann, bezeichnen,
oder ein organisches Phosphonit der Formel III 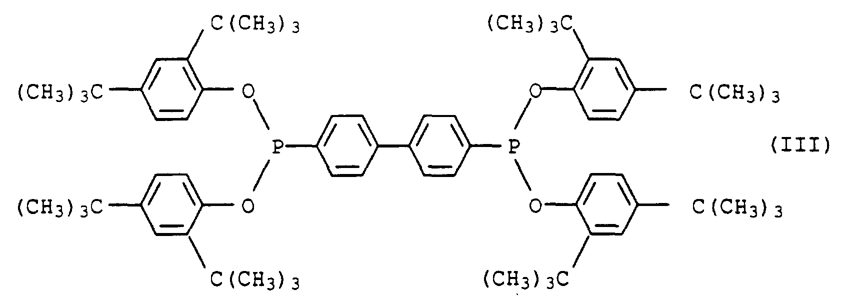 oder Mischungen aus den Phosphiten II und dem Phosphonit III und
c) ein oder mehrere Amine der allgemeinen Formel IV 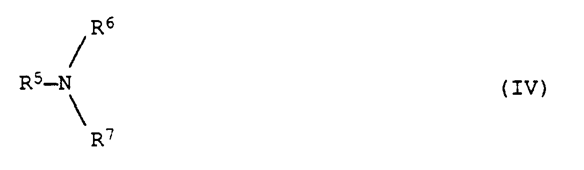 in der die Reste R⁵ bis R⁷ jeweils für Wasserstoff, für C₁- bis C₁₈-Alkyl, welches durch bis zu 5 nicht benachbarte Sauerstoffatome oder Gruppen der Formel -NR⁸- unterbrochen sein und durch bis zu 3 Hydroxylgruppen substituiert sein kann, wobei R⁸ Wasserstoff oder C₁- bis C₄-Alkyl bedeutet, oder für Phenyl, welches durch bis zu 3 C₄- bis C₁₈-Alkylgruppen substituiert sein kann, steht, mit der Ausnahme von NH₃ als Amin IV,
wobei die Komponenten (a) und (b) im Gew.-Verhältnis von 1:5 bis 1:14 stehen und die Komponente (c) in einer Menge von 0,01 bis 2,0 Gew.-%, bezogen auf die Menge von (a) + (b), im Stabilisatorgemisch vorliegt.

2. Stabilisatorgemisch nach Anspruch 1, bei dem als Komponente (c) tertiäre Amine eingesetzt werden.

3. Stabilisatorgemisch nach Anspruch 1, bei dem als Komponente (c) primäre, sekundäre oder tertiäre Amine mit Hydroxylgruppen enthaltenden C₂- bis C₁₈-Alkylresten für R⁵ bis R⁷ eingesetzt werden.

4. Verwendung von Stabilisatorgemischen gemäß den Ansprüchen 1 bis 3 zum Stabilisieren von organischem Material gegen die Einwirkung von Licht, Sauerstoff und Wärme.

5. Verwendung des Stabilisatorgemisches gemäß den Ansprüchen 1 bis 3 zum Stabilisieren von Kunststoffen gegen die Einwirkung von Licht, Sauerstoff und Wärme.

6. Gegen die Einwirkung von Licht, Sauerstoff und Wärme stabilisiertes organisches Material, enthaltend 0,005 bis 5,0 Gew.-%, bezogen auf die Menge des organischen Materials, des Stabilisatorgemisches gemäß den Ansprüchen 1 bis 3.

7. Gegen die Einwirkung von Licht, Sauerstoff und Wärme stabilisierte Kunststoffe, enthaltend 0,005 bis 5,0 Gew.-%, bezogen auf die Menge der Kunststoffe, des Stabilisatorgemisches gemäß den Ansprüchen 1 bis 3.

## Claims

1. A stabilizer mixture comprising
(a) one or more chroman derivatives of the general formula I 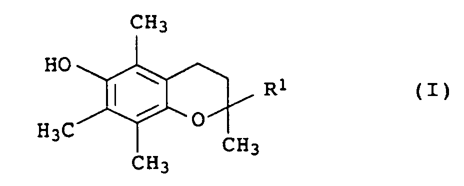 where R¹ is a group of the formula 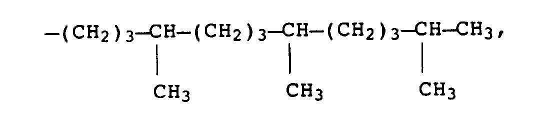 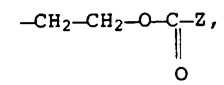 where z is C₇-C₃₀-alkyl,
-CH₂CH₂-S-(C₁-C₃₀-alkyl), or 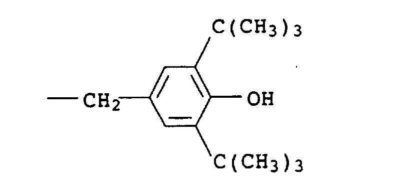
(b) one or more organic phosphites of the general formula II 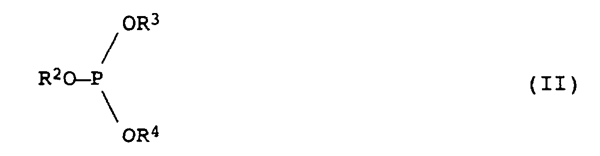 where R² to R⁴ are each C₂-C₁₂-alkyl, or C₆-C₁₈-aryl which can be substituted by C₁-C₁₈-alkyl groups,
or an organic phosphonite of the formula III 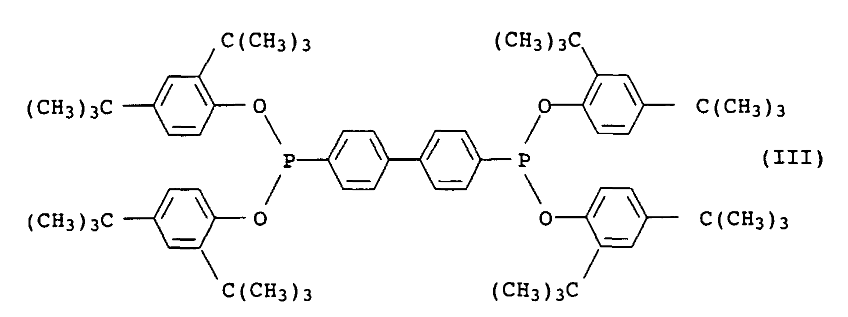 or mixtures of the phosphites II and the phosphonite III and
(c) one or more amines of the general formula IV 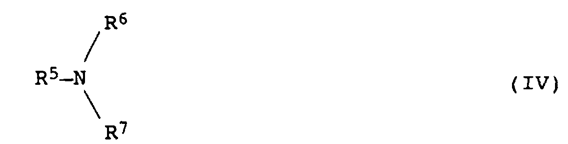 where R⁵ to R⁷ are each hydrogen, C₁-C₁₈-alkyl, which can be interrupted by up to 5 non-adjacent oxygen atoms or groups of the formula -NR⁸- and can be substituted by up to 3 hydroxyl groups, where R⁸ is hydrogen or C₁-C₄-alkyl, or is phenyl which can be substituted by up to 3 C₄-C₁₈-alkyl groups, with the exception of NH₃ as amine IV,
where the components (a) and (b) are present in the ratio of from 1:5 to 1:14 by weight and the component (c) is present in an amount of from 0.01 to 2.0 % of the weight of (a) + (b) in the stabilizer mixture.

2. A stabilizer mixture as claimed in claim 1, wherein tertiary amines are used as component (c).

3. A stabilizer mixture as claimed in claim 1, wherein primary, secondary or tertiary amines with C₂-C₁₈-alkyl radicals containing hydroxyl groups for R⁵ to R⁷ are used as component (c).

4. The use of stabilizer mixtures as claimed in any of claims 1 to 3 for stabilizing organic material against the effect of light, oxygen and heat.

5. The use of the stabilizer mixture as claimed in any of claims 1 to 3 for stabilizing plastics against the action of light, oxygen and heat.

6. Organic material which is stabilized against the action of light, oxygen and heat and contains from 0.005 to 5.0 % by weight, based on the amount of organic material, of the stabilizer mixture as claimed in any of claims 1 to 3.

7. Plastic which is stabilized against the action of light, oxygen and heat and contains from 0.005 to 5.0 % by weight, based on the amount of the plastic, of the stabilizer mixture as claimed in any of claims 1 to 3.

## Revendications

1. Mélange stabilisant, contenant
(a) un ou plusieurs dérivés de chromane de formule générale I 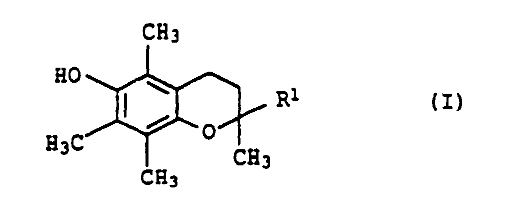 dans laquelle R¹ représente un groupe de formule 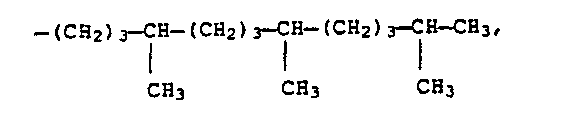 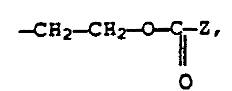 dans laquelle Z représente un groupe alkyle en C₇ à C₃₀,
-CH₂-CH₂-S-(alkyle en C₁ à C₃₀) ou 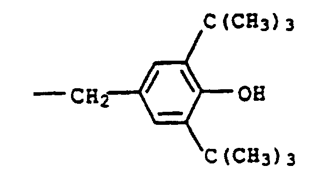
(b) un ou plusieurs phosphites organiques de formule générale II 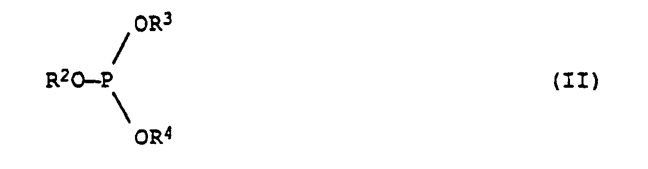 dans laquelle les résidus R² à R⁴ représentent chacun un groupe alkyle en C₂ à C₁₂, ou aryle en C₆ à C₁₈, qui peut être substitué par des groupes alkyle en C₁ à C₁₈,
ou un phosphonite organique de formule III 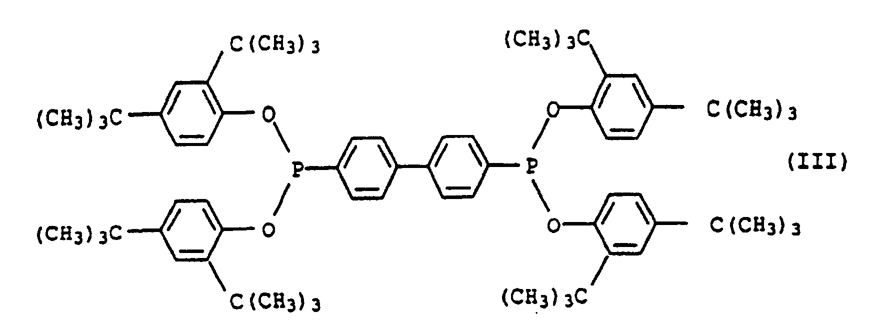 ou des mélanges des phosphites II et du phosphonite III et
(c) une ou plusieurs amines de formule générale IV 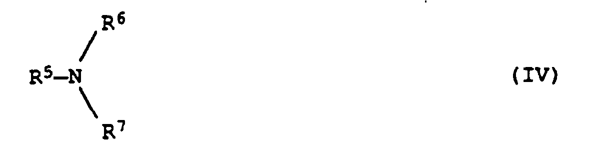 dans laquelle les résidus R5 à R⁷ représentent chacun un atome d'hydrogène, un groupe alkyle en C₁ à C₁₈, qui peut être interrompu par au maximum 5 atomes d'oxygène ou groupes de formule -NR⁸- non vicinaux et peut être substitué par vicinaux 3 groupes hydroxyle, R⁸ représentant un atome d'hydrogène ou un groupe alkyle en C₁ à C₄, ou un groupe phényle, qui peut être substitué par au maximum 3 groupes alkyle en C₄ à C₁₈, à l'exception de NH₃ comme amine IV,
où les composants (a) et (b) sont dans un rapport pondéral de 1:5 à 1:14 et le composant (c) est présent dans le mélange stabilisant en une quantité de 0,01 à 2,0% en poids, par rapport à la quantité de (a) + (b).

2. Mélange stabilisant selon la revendication 1, dans lequel on met en oeuvre comme composant (c) des amines tertiaires.

3. Mélange stabilisant selon la revendication 1, dans laquelle on met en oeuvre comme composant (c) des amines primaires, secondaires ou tertiaires ayant des résidus alkyles en C₂ à C₁₈, contenant des groupes hydroxyles mis pour R⁵ à R⁷.

4. Utilisation de mélanges stabilisants selon les revendications 1 à 3 pour stabiliser une matière organique contre l'effet de la lumière, de l'oxygène et de la chaleur.

5. Utilisation du mélange stabilisant selon les revendications 1 à 3 pour stabiliser les matières plastiques contre l'effet de la lumière, de l'oxygène et de la chaleur.

6. Matière organique stabilisée contre l'effet de la lumière, de l'oxygène et de la chaleur, contenant 0,005 à 5,0% en poids, du mélange stabilisant selon les revendications 1 à 3, par rapport à la quantité de matière organique.

7. Matières plastiques stabilisées contre l'effet de la lumière, de l'oxygène et de la chaleur, contenant 0,005 à 5,0% en poids, du mélange stabilisant selon les revendications 1 à 3, par rapport à la quantité des matières plastiques.
